# DEMANDE DE BREVET EUROPEEN

(11) **EP 3 502 800 A1**
(43) Date de publication de la demande: **26.06.2019**
(21) Numéro de dépôt: 17209104.3
(22) Date de dépôt: 20.12.2017
(51) Int. Cl.: G04D 3/00, G04B 19/12

(54) **PROCÉDÉ DE RÉALISATION D'UN ÉLÉMENT FONCTIONNEL SUR UN COMPOSANT HORLOGER**

(71) Demandeur: ETA SA Manufacture Horlogère Suisse, 2540 Grenchen (CH)
(72) Inventeur: RAILLARD, Brice, 2502 Bienne (CH); MIHAILOVIC, Vlada, 4556 Burgäschi (CH); BRUNNER, Johannes, 3296 Arch (CH); EMENEGGER, Christophe, 1730 Ecuvillens (CH); JEANRENAUD, Frédéric, 2300 La Chaux-de-Fonds (CH)
(74) Mandataire: ICB SA

(57) **Abrégé**

L'invention concerne un procédé de réalisation d'un élément fonctionnel (20) sur un composant horloger (10) comprenant les étapes suivantes :
- génération (46) par une unité de contrôle d'au moins une instruction de pilotage d'un dispositif d'impression (3) visant à reproduire une représentation graphique numérique de référence (9a) relative audit élément fonctionnel (20), et
- construction (47) par le dispositif d'impression (3) d'au moins une couche d'au moins une particule fonctionnelle imprimée sur le composant horloger (10) formant l'élément fonctionnel (20).

## Description

### Domaine technique

La présente invention concerne un procédé de réalisation d'un élément fonctionnel sur un composant horloger et un système mettant en oeuvre un tel procédé.

L'invention concerne également un composant horloger comprenant un tel élément fonctionnel ainsi qu'une pièce d'horlogerie pourvue de ce composant.

La présente invention porte aussi sur un programme d'ordinateur.

### Art antérieur

Dans l'état de la technique, des composants horlogers tels que des cadrans ou encore des aiguilles d'une montre peuvent comprendre des éléments fonctionnels comme par exemple des éléments phosphorescents qui participent à rendre visibles dans le noir au porteur de la montre, ces aiguilles ou des indexes de ces cadrans. De tels éléments phosphorescents comprennent une couche de matériau phosphorescent prévue pour absorber l'énergie lumineuse qui sera ensuite restituée de nuit sous forme de rayonnement lumineux. Ces éléments phosphorescents sont classiquement montés dans ces composants horlogers de manière artisanale selon des procédés mettant en oeuvre des techniques de sérigraphie ou encore de tampographie.

Toutefois, de tels procédés sont relativement complexes à réaliser du fait du nombre important d'opérations nécessaires à leur mise en oeuvre et des différents types d'outillage qu'ils requièrent. De plus, les techniques qu'ils mettent en oeuvre sont difficilement implémentables dans le cadre de processus de montage automatique de ces éléments fonctionnels sur ces composants horlogers.

### Résumé de l'invention

Un but de la présente invention est par conséquent de proposer un procédé qui permet la réalisation d'un élément fonctionnel sur un composant horloger de manière rapide et simple et qui contribue aussi à améliorer la production à grande échelle de manière automatique et économe de composants horlogers pourvus de tels éléments fonctionnels.

Dans ce dessein, l'invention porte sur un procédé de réalisation d'un élément fonctionnel sur un composant horloger comprenant les étapes suivantes :
- génération par une unité de contrôle d'au moins une instruction de pilotage d'un dispositif d'impression visant à reproduire une représentation graphique numérique de référence relative audit élément fonctionnel, et
- construction par le dispositif d'impression d'au moins une couche d'au moins une particule fonctionnelle imprimée sur le composant horloger formant l'élément fonctionnel.

Ainsi grâce à ces caractéristiques, le procédé de réalisation permet d'édifier un élément fonctionnel sur un composant horloger en un nombre réduit d'opérations qui sont d'une mise en oeuvre simple et rapide

Dans d'autres modes de réalisation :
- l'étape de construction comprend pour la couche d'au moins une particule fonctionnelle imprimée une sous-étape d'application d'une couche d'au moins une particule fonctionnelle sur le composant horloger et une sous-étape de traitement de ladite couche d'au moins une particule fonctionnelle ;
- la sous-étape d'application prévoit une exécution par l'unité de contrôle de ladite au moins une instruction de commande comprenant des données descriptives de ladite représentation graphique numérique de référence devant être reproduite ;
- la sous-étape d'application prévoit le dépôt d'au moins une encre comprenant ladite au moins une particule fonctionnelle ;
- ladite encre comprend un fluide transportant ladite au moins une particule fonctionnelle, le fluide étant choisi parmi un solvant, un polymère viscoélastique, une huile, de l'eau et/ou une solution aqueuse ;
- la sous-étape de traitement de la couche d'au moins une particule fonctionnelle comprend une phase de fixation de ladite couche d'au moins une particule fonctionnelle sur le composant horloger ;
- la phase de fixation prévoit une exposition de la couche d'au moins une particule fonctionnelle à un flux d'air notamment chaud/sec et/ou à un rayonnement lumineux notamment à un rayonnement ultraviolet ou encore infrarouge ;
- lorsqu'une autre particule forme ladite au moins une couche édifiée lors de l'étape de construction, cet autre particule est colorée, pigmentée, incolore, transparente ou translucide, et
- ladite au moins une particule fonctionnelle est comprise dans une encre fonctionnelle sélectionnée parmi le groupe constitué par une encre électroluminescente, une encre phosphorescente, encre photoluminescente, une encre conductrice, une encre semiconductrice, une encre électroactive, une encre magnétique, une

encre photochrome, encre électrochrome, encre thermochrome, une encre ionochrome et une encre mécanochrome.

L'invention porte aussi sur un composant horloger comprenant au moins un élément fonctionnel susceptible d'être obtenu à partir d'un tel procédé.

Avantageusement, l'élément fonctionnel est un élément constitutif du composant horloger qui est susceptible de changer d'état de manière réversible, ce changement d'état permettant de réaliser une fonction d'affichage de la pièce d'horlogerie ou de constituer une étape dans un processus de fonctionnement d'un mouvement de la pièce d'horlogerie visant à accomplir une fonction de cette pièce d'horlogerie ;

L'invention porte également sur une pièce d'horlogerie comportant au moins un tel composant horloger.

L'invention porte aussi sur un système de réalisation d'un élément fonctionnel sur un composant horloger mettant en oeuvre un tel procédé, le système comprenant un dispositif d'impression et une unité de contrôle, ledit dispositif d'impression étant connecté à ladite unité de contrôle.

Avantageusement, l'unité de contrôle comprend des ressources matérielles et logicielles, lesdites ressources matérielles comprenant des éléments de mémoire comportant au moins une représentation graphique numérique de référence relative à l'élément fonctionnel à réaliser sur le composant horloger et des données descriptives relatives à ladite au moins une représentation graphique numérique de référence.

L'invention porte aussi sur un programme d'ordinateur comprenant des instructions de code de programme pour l'exécution des étapes de ce procédé lorsque ledit programme est exécuté par une unité de contrôle.

### Brève description des figures

D'autres caractéristiques et avantage de la présente invention apparaîtront à la lecture de plusieurs formes de réalisation données uniquement à titre d'exemples non limitatifs et faites en référence aux dessins annexés dans lesquels :
- la figure 1 est une représentation schématique relative à un système de réalisation d'un élément fonctionnel sur un composant horloger, selon un mode de réalisation de l'invention ;
- la figure 2 est un logigramme relatif à un procédé de réalisation d'un élément fonctionnel sur un composant horloger, selon le mode de réalisation de l'invention ;
- la figure 3 est une représentation schématique d'une pièce d'horlogerie comprenant un composant horloger pourvu d'au moins un élément fonctionnel, selon le mode de réalisation de l'invention, et
- la figure 4 représente une vue schématique d'un dispositif d'impression du système, selon le mode de réalisation de l'invention.

### Description détaillée de l'invention

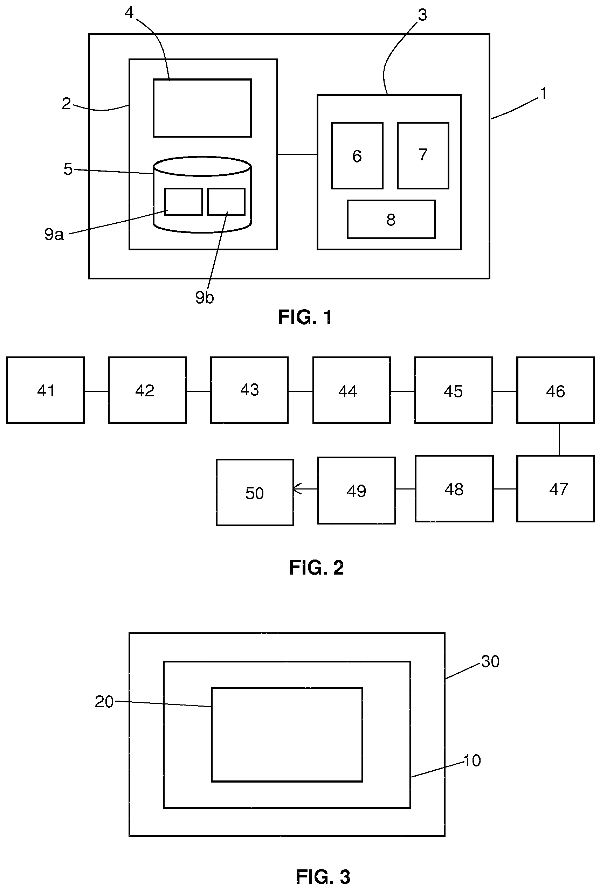

En référence à la figure 1, le système de réalisation 1 d'un élément fonctionnel 20 sur un composant horloger 10 d'une pièce d'horlogerie 30 comprend une unité de contrôle 2 et un dispositif d'impression 3.

On entend par élément fonctionnel 20, un élément constitutif de ce composant horloger 10 et donc de la pièce d'horlogerie 30 qui est susceptible de changer d'état de manière réversible. Ce changement d'état de cet élément fonctionnel 20 permet de réaliser une fonction d'affichage de la pièce d'horlogerie 30 et/ou de constituer une étape dans un processus de fonctionnement du mouvement visant à accomplir une fonction de la pièce d'horlogerie 30. Ce changement d'état peut être un changement de couleur ou encore de propriétés physiques ou chimiques de cet élément fonctionnel 20. Un tel changement est basé de préférence sur un changement de l'état électronique des molécules constituant cet élément fonctionnel 20, changement qui est induit par un stimuli externe lequel peut altérer la densité électronique des substances impliquées.

Dans ce contexte, un tel élément fonctionnel peut être de manière non limitative et non exhaustive : un élément électroluminescent, un élément phosphorescent, un élément photoluminescent, un élément conducteur, un élément semi-conducteur, un élément isolant, un élément électroactif, un élément magnétique, un élément photochrome, un élément électrochrome, un élément thermochrome, un élément ionochrome et un élément mécanochrome.

Dans la pièce d'horlogerie 30, le composant horloger 10 sur lequel est défini l'élément fonctionnel 20, peut être de manière non limitative et non exhaustive : une lunette, une aiguille, un réhaut, un boitier, un fond de boitier, une masse oscillante, un disque, une glace, un bracelet ou encore un élément constitutif du mouvement. On notera que ce composant horloger 10 peut également être un substrat destiné à former un tel composant 10.

Dans ce système 1, l'unité de contrôle 2 est connectée au dispositif d'impression 3 afin notamment d'assurer le pilotage de ce dispositif 3. L'unité de contrôle 2 peut être une ordinateur ou encore un microcontrôleur en comprenant des ressources matérielles et logicielles en particulier au moins un processeur 4 coopérant avec des éléments de mémoire 5. Cette unité de contrôle 2 est apte à exécuter des instructions pour la mise en oeuvre d'un programme d'ordinateur.

Dans cette unité de contrôle 2, les éléments de mémoire 5 comprennent en plus du programme d'ordinateur, des données relatives à au moins une représentation graphique numérique de référence 9a susceptible d'être reproduite par l'élément fonctionnel 20 et qui sera édifié sur le composant horloger 10, ainsi que des données descriptives 9b relatives à ladite au moins une représentation graphique numérique de référence 9a. Une représentation graphique numérique de référence 9a comprend par exemple une représentation graphique tridimensionnelle 3D de référence ou une représentation graphique bidimensionnelle 2D de référence. On notera que la représentation graphique numérique de référence 9a est générée par un module de conception du système 1 qui est relié à l'unité de contrôle 2, pouvant comprendre un dispositif de numérisation tridimensionnelle et/ou bidimensionnelle, ou encore par un outil logiciel exécuté par l'unité de contrôle 2 permettant une modélisation 2D/3D virtuelle à partir de photographies ou d'images, ou permettant encore de concevoir un objet numérique virtuel tridimensionnel (par exemple un logiciel de conception assistée par ordinateur plus connue sous l'acronyme CAO).

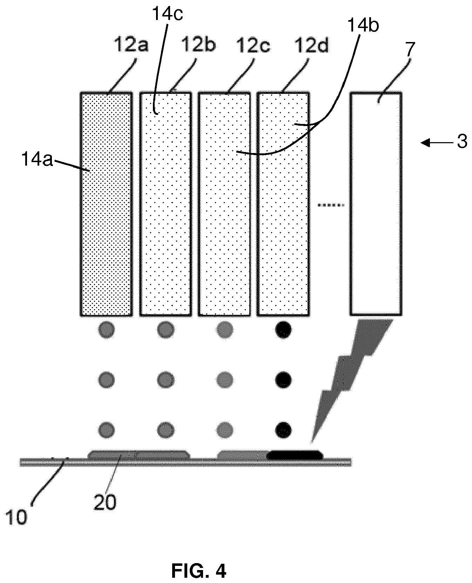

Sur les figures 1 et 4, un tel dispositif d'impression 3 comprend un organe d'impression 6, un organe de fixation 7 et un organe d'entrainement 8. L'organe d'impression 6 comprend plusieurs entités d'impression notamment des cartouches d'impression à jet d'encre chaque cartouche comprenant une tête d'impression et au moins un réservoir 12a à 12d. Dans le présent mode de réalisation, chaque cartouche comprend au moins une tête d'impression et au moins un réservoir 12a à 12d à jet d'encre. Dans ces cartouches, l'encre comporte au moins une particule pouvant être comprise dans un fluide. Un tel fluide est prévu pour assurer le transport de cette dite au moins une particule sur le support sur lequel elle doit être déposée ici le composant horloger 10, lors de son éjection de l'entité. Un tel fluide peut être tout corps susceptible d'assurer ce transport et/ou qui est aussi susceptible de participer à la liaison d'au moins une particule avec un support comprenant le composant horloger 10 ou encore une couche d'au moins une particule déjà présente sur ce composant 10. Ce fluide peut être choisi de manière non limitative et non exhaustive parmi un solvant, un polymère viscoélastique, une huile, de l'eau et une solution aqueuse. A titre d'exemple, lorsqu'il s'agit d'un polymère viscoélastique ce fluide est un fluide polymère viscoélastique en phase liquide non polymérisé qui est de préférence photo-polymérisable. On notera que dans une variante, ladite au moins une particule peut être déposée sur ce support sans requérir un tel fluide pour assurer son transport. Dans cet organe d'impression 6, au moins une cartouche comprend nécessairement une encre fonctionnelle 14a comportant au moins une particule fonctionnelle. Une telle encre peut être par exemple une encre électroluminescente, une encre phosphorescente, encre photoluminescente, une encre conductrice, une encre semiconductrice, une encre électroactive, une encre magnétique, une encre photochrome, encre électrochrome, encre thermochrome, une encre ionochrome et une encre mécanochrome.

Les autres cartouches de cet organe d'impression 6 peuvent comprendre d'autres types d'encre comme par exemple :
- une encre colorée 14b comportant au moins une particule pigmentée ou colorée, ou
- une encre incolore ou transparente ou translucide 14c, telle qu'une laque, comportant au moins une particule incolore ou transparente ou translucide.

Une couche constituée d'au moins une particule fonctionnelle et d'au moins une particule colorée ou pigmentée, et/ou d'au moins une particule incolore ou transparente ou translucide, peut présenter de manière non exhaustive et non limitative :
- une couleur blanche uniquement ;
- une couleur blanche avec un rendu mat ou brillant par la présence d'au moins une particule incolore ou transparente ou translucide ;
- une couleur noire uniquement ;
- une couleur noire avec un rendu mat ou brillant par la présence d'au moins une particule incolore ou transparente ou translucide ;
- une laque incolore
- une laque incolore avec un rendu mat ou brillant par la présence d'au moins une particule incolore ou transparente ou translucide
- une large gamme de couleurs grâce à la technique de la quadrichromie mettant en oeuvre les couleurs fondamentales telles que le cyan, le magenta, le jaune et le noir (appelé système CMJN) permettant de reproduire cette large gamme de couleurs à partir de trois couleurs élémentaires, un bleu-vert appelé cyan, un rouge dit magenta et un jaune auxquelles on ajoute la couleur noire.

En complément, un tel dispositif d'impression 3 est par ailleurs capable de participer à la réalisation d'un élément fonctionnel 20 sur le composant horloger 10 avec une résolution faible ou encore avec une résolution élevée pouvant être supérieure ou égale à 2400 dpi (pixels par pouce).

Dans ce dispositif d'impression 3, l'organe d'entrainement 8 est apte à provoquer le déplacement de l'organe d'impression 6 dans différentes directions relativement à un élément de support du système 1 sur lequel est susceptible d'être disposé le composant horloger 10. Cet élément de support qui est apte à faire défiler le composant horloger 10 devant les têtes d'impression 12a à 12d, peut comprendre un élément de liaison amovible de composant horloger 10 comme par exemple un élément adhésif. S'agissant de l'organe de fixation 7 il est prévu pour assurer la fixation d'une couche d'au moins une particule sur le support ici le composant horloger ou une première couche ou couche initiale déjà présente sur ce composant horloger 10. Cet organe de fixation 7 comprend un module susceptible d'émettre un rayonnement ultraviolet UV et/ou infrarouge et/ou un flux d'air notamment un flux d'air chaud. Ce module est apte à générer un rayonnement ou un flux d'air sur tout ou partie d'une zone de montage d'une surface du composant horloger 10 sur laquelle est susceptible d'être édifié l'élément fonctionnel 20. On notera que lorsque les différentes encres évoquées précédemment comprennent un fluide polymère viscoélastique, le module est un module de photo-polymérisation pourvu d'une source de rayonnement ultraviolet UV et qui est donc apte à générer un rayonnement UV sur tout ou partie de la zone de montage de la surface du composant horloger 10 sur laquelle est susceptible d'être édifié l'élément fonctionnel 20.

Un tel système 1 est apte à mettre en oeuvre un procédé de réalisation de l'élément fonctionnel 20 sur le composant horloger 10 représenté sur la figure 2.

Ce procédé comprend une étape de génération 41 d'au moins une représentation graphique numérique de référence 9a. Une telle représentation graphique numérique de référence 9a correspond à une définition notamment structurelle de l'élément fonctionnel 20 qui doit être construit sur le composant horloger 10. Lors cette étape 41, cette représentation graphique numérique de référence 9a peut être réalisée à partir d'une numérisation tridimensionnelle/bidimensionnelle ou encore lors de l'exécution par l'unité de contrôle 2 d'un logiciel de modélisation 2D/3D virtuelle ou de conception d'un objet numérique virtuel tridimensionnel (par exemple un logiciel de conception assistée par ordinateur plus connue sous l'acronyme CAO). Une fois généré, cette représentation graphique numérique de référence 9a est archivée sous le format d'un fichier numérique de données dans les éléments de mémoire 5 de l'unité de contrôle 2. Autrement dit, un tel fichier comprend des données d'information relatives à la représentation graphique numérique de référence 9a.

Le procédé prévoit ensuite une étape de détermination 42 de données descriptives 9b relatives à ladite représentation graphique numérique de référence 9a. Une telle étape 22 est mise en oeuvre par l'unité de contrôle 2 et permet donc de déterminer des données descriptives 9b qui participent notamment à sélectionner le ou les types d'encres nécessaires à la réalisation de l'élément fonctionnel 20 sur le composant horloger 10 ainsi que la direction de déplacement de l'organe d'impression 6. Lors de cette étape 42, un traitement de ce fichier et en particulier des données d'information relatives la représentation graphique numérique de référence 9a, est alors réalisé. Plus précisément, lors de ce traitement, l'unité de contrôle 2 détermine des éléments caractéristiques de la représentation graphique numérique de référence 9a tels que :
- au moins une dimension de cette représentation graphique numérique de référence 9a, il peut s'agir par exemple d'une épaisseur, longueur largueur, surface, d'un volume, etc... ;
- des aspects visuels/esthétiques/structurels c'est-à-dire visuels et/ou esthétiques et/ou structurels de la représentation graphique numérique de référence 9a tels que la couleur et/ou la texture, etc...
- des caractéristiques fonctionnelles physiques et/ou chimiques que devra présenter l'élément fonctionnel 20, telles que par exemple :
   - la conductivité électrique, caractère semi-conducteur ou isolant ;
   - la semi-conductivité
   - l'électroluminescence ;
   - la photoluminescence (par exemple une réaction à un rayonnement ultraviolet) ;
   - la phosphorescence,
   - « X-chromisme » (photochrome, électrochrome, thermochrome, ionochrome, mécanochrome...),
   - l'électroactivation,
   - le magnétisme,
   - etc...

On notera que dans une variante, ce traitement peut prévoir la mise en oeuvre notamment d'un processus de division/découpe numérique de cette représentation graphique 9a en au moins deux couches selon une direction transversale qui peut être horizontale, verticale ou oblique, et/ou une direction longitudinale qui peut être horizontale, verticale ou oblique. Dans ce cas, l'unité de contrôle 2 détermine alors des éléments caractéristiques de chacune de ces couches qui sera reproduite pour l'édification de l'élément fonctionnel 20 sur le composant horloger10.

Les éléments caractéristiques constituent les données descriptives 9b relatives à la représentation graphique numérique de référence 9a qui sont archivées dans les éléments de mémoire 5 de l'unité de contrôle 2.

Le procédé de réalisation de cet élément fonctionnel 20 comprend aussi une étape d'agencement 43 du composant horloger 10 sur l'élément de support du système 1. Il comprend également une étape de sélection 44 de la représentation graphique numérique de référence 9a qui doit être reproduite sur le composant horloger 10 afin d'y édifier l'élément fonctionnel 20. Lors de cette étape de sélection 44, il est alors possible de choisir cette représentation graphique numérique de référence 9a à partir d'une interface homme-machine (IHM) reliée à l'unité de contrôle 2. On notera que cette étape de sélection 44 peut indifféremment être mise en oeuvre avant ou après l'étape d'agencement 43.

Ce procédé comprend en outre une étape de traitement 45 de la surface du composant horloger 10 notamment de la zone de montage de cette surface sur laquelle l'élément fonctionnel 20 va être réalisée. Cette étape de traitement 45 peut indifféremment être mise en oeuvre avant ou après l'une ou l'autre des étapes génération 41, de détermination 42, d'agencement 43 ou encore de sélection 44. Une telle étape de traitement 45 peut être réalisée en mettant en oeuvre des technologies de traitement par plasma atmosphérique, par plasma basse pression, par flammage, par décharge électrique CORONA, par dépôt d'une couche organique, par bain de nettoyage, par galvanisation, par utilisation de primaire d'adhésion ou une combinaison de l'une ou l'autre ou plusieurs de ces technologies entre elles. Une telle étape 45 peut être réalisée ou pas sous vide. En complément, on notera que cette étape de traitement 45 contribue à assurer une bonne adhésion entre la surface plane du composant horloger 10 et l'élément fonctionnel 20 réalisé sur le composant horloger 10 notamment entre une première couche dite couche initiale constituant cet élément fonctionnel 20 avec cette surface, en particulier lorsque cet élément fonctionnel 20 est construit à partir d'au moins deux couches d'au moins une particule fonctionnelle comme on le verra par la suite.

Le procédé prévoit ensuite une étape de génération 46 par l'unité de contrôle 2 d'au moins une instruction de commande pour le pilotage du dispositif d'impression 3, ladite au moins une instruction visant en la reproduction de la représentation graphique numérique de référence 9a pour l'édification de l'élément fonctionnel 20 sur le composant horloger 10. Cette étape de génération 46 de cette dite au moins une instruction de commande est réalisée à partir des données descriptives 9b relatives à la représentation graphique numérique de référence 9a. Cette dite au moins une instruction comprend des critères de réalisation de l'élément fonctionnel 20 sur le composant horloger 10, notamment des critères de pilotage du dispositif d'impression 3 et en particulier de l'organe d'impression 6 et de l'organe de fixation 7. Ces critères de réalisation comprennent de manière non limitative et non exhaustive des données relatives à :
- une sélection des cartouches comprenant les têtes d'impression 12a à 12d nécessaires à la reproduction de la représentation graphique numérique de référence 9a et ce, en fonction de l'encre qu'elles contiennent, en particulier à la reproduction des caractéristiques fonctionnelles et des aspects visuels/esthétiques/structurels de la représentation graphique numérique de référence 9a ;
- déplacement de la tête d'impression 12a à 12d de chaque cartouche relativement à la zone de montage de la surface du composant horloger 10 pour reproduction des caractéristiques fonctionnelles et des aspects visuels/esthétiques/structurels et/ou d'au moins une dimension de la représentation graphique numérique de référence 9a ;
- distance et/ou positionnement de la tête d'impression 12a à 12d de chaque cartouche relativement à la zone de montage de la surface du composant horloger 10 pour la reproduction des caractéristiques fonctionnelles et des aspects visuels/esthétiques/structurels et/ou d'au moins une dimension de la représentation graphique numérique de référence 9a ;
- durée de positionnement de la tête d'impression 12a à 12d de chaque cartouche relativement à la zone de montage de la surface du composant horloger 10 pour reproduction des caractéristiques fonctionnelles et des aspects visuels/esthétiques/structurels et/ou d'au moins une dimension de la représentation graphique numérique de référence 9a ;
- débit d'encre éjecté des têtes d'impression 12a à 12d, notamment le nombre de gouttes éjectées pour reproduction des caractéristiques fonctionnelles et des aspects visuels/esthétiques/structurels et/ou d'au moins une dimension de la représentation graphique numérique de référence 9a.

Par la suite le procédé comprend une étape de construction 47 par le dispositif d'impression 3 d'au moins une couche d'au moins une particule fonctionnelle imprimée sur le composant horloger 10 formant l'élément fonctionnel 20. Ladite au moins une particule fonctionnelle est comprise dans l'encre fonctionnelle évoquée précédemment. On notera en effet, qu'une couche peut être formée uniquement à partir d'au moins une particule fonctionnelle imprimée ou à partir de cette dite au moins une particule et d'autres particules colorées et/ou incolores/transparentes/translucides imprimées.

Cette étape de construction 47 comprend pour chaque couche d'au moins une particule fonctionnelle imprimée édifiée sur le composant horloger 10 deux sous-étapes 48, 49. La première sous-étape est une sous-étape d'application 48 d'une couche d'au moins une particule fonctionnelle sur ce composant horloger 10 en particulier sur la zone de montage de la surface de ce composant 10. Cette application de la couche peut être réalisée de manière continue ou sélective. Ainsi que nous l'avons évoqué précédemment ladite au moins une particule est une particule fonctionnelle. On comprend que cette couche peut comprendre plusieurs autres types de particules en plus d'au moins une particule fonctionnelle, choisis parmi les particules colorées ou incolores/translucides/transparentes. En outre, cette sous-étape d'application 48 prévoit une exécution par l'unité de contrôle 2 de ladite au moins une instruction de commande comprenant des données descriptives de ladite représentation graphique numérique de référence 9a devant être reproduite. L'exécution de la dite au moins une instruction permet de contrôler dans le cadre de l'application de cette couche, le dépôt d'au moins une encre comprenant ladite au moins une particule fonctionnelle et éventuellement d'autres types d'encres comprenant au moins une particule colorées ou incolores/translucides/transparentes. La deuxième sous-étape est une sous-étape de traitement 49 de ladite couche d'au moins une particule fonctionnelle succédant directement à la sous-étape d'application 48, et qui participe à finaliser l'impression de cette couche sur le composant horloger 10 afin d'obtenir une couche dans laquelle ladite au moins une particule est imprimée sur ce composant 10. Cette sous-étape de traitement 49 de la couche d'au moins une particule fonctionnelle comprend une phase de fixation de ladite couche d'au moins une particule fonctionnelle sur le composant horloger 10. Cette phase de fixation prévoit une exposition de la couche d'au moins une particule fonctionnelle à un flux d'air notamment chaud et/ou à un rayonnement lumineux notamment à un rayonnement ultraviolet (UV) ou encore infrarouge. Cette phase de fixation vise ainsi à transformer, fixer ou lier (telle une particule dans une matrice)la couche d'au moins une particule fonctionnelle qui est l'état pâteux ou liquide en une couche d'au moins une particule fonctionnelle imprimée qui est à l'état solide, rigide, élastique, sec, réticulé et/ou infusible. On notera qu'une telle transformation à l'avantage d'être réalisée très rapidement en général en moins d'une seconde.

Dans un exemple dans lequel la particule fonctionnelle est comprise dans une encre polymère viscoélastique c'est-à-dire une encre comprenant un fluide polymère viscoélastique apte à transporter cette dite au moins une particule fonctionnelle, l'étape de construction 47 prévoit une sous-étape d'application 48 dans laquelle l'unité de contrôle 2 exécute ladite au moins une instruction de pilotage comprenant des données descriptives 9b de ladite représentation graphique numérique de référence 9a devant être reproduite. Par la suite, le dispositif d'impression 3 applique une couche d'au moins une particule fonctionnelle directement sur la zone de montage de la surface prévue à cet effet sur le composant horloger 10 en fonction de ladite au moins une instruction de pilotage exécutée. Cette couche comprend une encre fonctionnelle comportant ladite au moins une particule fonctionnelle transportée par un fluide polymère viscoélastique, cette encre est également appelée dans ce contexte encre polymère viscoélastique fonctionnelle. Cette couche d'encre polymère viscoélastique fonctionnelle est autrement appelée couche initiale ou première couche. Cette première couche et donc le ou les particules qui la constituent, subit ensuite une polymérisation lors de la sous-étape de traitement 49 de cette couche. En effet, cette sous-étape 49 comprend une phase de fixation de cette couche sur la zone de montage. Lors de cette phase, ladite couche est photo-polymérisée en étant exposée à un rayonnement lumineux notamment à un rayonnement ultraviolet UV émis par l'organe de fixation 7 et qui vise à la transformer en une couche d'encre polymère acrylate fonctionnelle encore nommée couche d'encre polymère viscoélastique fonctionnelle polymérisée encore appelée couche d'encrepolymère viscoélastique fonctionnelle imprimée. On notera que cette encre polymère viscoélastique polymérisé/imprimée peut être également appelée encre polymère photo-réticulée ou encore une encre polymère photo-polymérisée. Par la suite, le dispositif d'impression 3 peut appliquer une deuxième couche d'au moins une particule fonctionnelle et/ou colorée et/ou incolore/translucide/transparente sur la première couche d'au moins un fluide polymère viscoélastique polymérisé déjà présente sur le composant horloger 10 et ce, en fonction de ladite au moins une instruction de pilotage exécutée. Cette deuxième couche peut comprendre une encre fonctionnelle et/ou une encre colorée et/ou une encre incolore/translucide/transparente comportant ladite au moins une particule correspondante transportée par un fluide polymère viscoélastique, ces encres sont également appelées dans ce contexte encre polymère viscoélastique fonctionnelle, encre polymère viscoélastique colorée et encre polymère viscoélastique incolore/translucide/transparente. Cette deuxième couche et donc le ou les particules qui la constituent, subit aussi une polymérisation lors de la sous-étape de traitement 49. Ces première et deuxième couches sont agencées sur le composant horloger 10 en étant sensiblement superposées ou superposées. En effet, la deuxième couche peut être dans une variante appliquée à la fois sur la première couche et directement sur la zone de montage de la surface du composant horloger 10. Dans ces conditions, cette polymérisation permet de fixer la première couche à la surface du composant horloger 10 et la deuxième couche à la première couche ou encore à cette première couche et aussi à la zone de montage de la surface du composant horloger 10 selon les variantes correspondantes.

Par la suite, ce procédé comprend une étape de retrait 50 du composant horloger 10 de l'élément de support du système 1 avant d'être conditionné jusqu'à la conception d'une pièce d'horlogerie 30.

On notera que l'élément fonctionnel 20 sur ce composant horloger 10 peut être en couleur, multicolore, monochrome, transparent ou translucide et comprendre ou être compris par exemple dans un élément décoratif ou un motif pouvant présenter un relief.

En remarque, on entend donc par couche d'au moins une particule, une couche qui est déposée sur la zone de montage de la surface du composant horloger 10 prévue à cet effet, de manière sélective ou continue et qui est susceptible de subir une phase de fixation par une exposition à un rayonnement lumineux ou à un flux d'air. Une couche, dans le contexte de l'invention, peut avoir une épaisseur constante en tout point ou une épaisseur irrégulière qui est obtenue par le dépôt d'un nombre variable de gouttes d'au moins une encre par au moins une tête d'impression 12a à 12d à jet d'encre en fonction de la position de cette tête 12a à 12d par rapport au composant horloger 10, et cela par au moins un seul passage de cette dite au moins une tête d'impression 12a à 12d au-dessus de la zone de montage de la surface du composant horloger 10 où l'élément fonctionnel 20 doit être édifié. On notera que chaque goutte comprend au moins une particule.

L'invention porte également un programme d'ordinateur comprenant des instructions de code de programme pour l'exécution des étapes 41 à 50 de ce procédé lorsque ledit programme est exécuté par l'unité de contrôle 2.

## Revendications

1. Procédé de réalisation d'un élément fonctionnel (20) sur un composant horloger (10) comprenant les étapes suivantes :
- génération (46) par une unité de contrôle d'au moins une instruction de pilotage d'un dispositif d'impression (3) visant à reproduire une représentation graphique numérique de référence (9a) relative audit élément fonctionnel (20), et
- construction (47) par le dispositif d'impression (3) d'au moins une couche d'au moins une particule fonctionnelle imprimée sur le composant horloger (10) formant l'élément fonctionnel (20).

2. Procédé selon la revendication précédente, **caractérisé en ce que** l'étape de construction (47) comprend pour la couche d'au moins une particule fonctionnelle imprimée une sous-étape d'application (48) d'une couche d'au moins une particule fonctionnelle sur le composant horloger (10) et une sous-étape de traitement (49) de ladite couche d'au moins une particule fonctionnelle.

3. Procédé selon la revendication précédente, **caractérisé en ce que** la sous-étape d'application (48) prévoit une exécution par l'unité de contrôle (2) de ladite au moins une instruction de commande comprenant des données descriptives de ladite représentation graphique numérique de référence (9a) devant être reproduite.

4. Procédé selon l'une des revendications 2 et 3, **caractérisé en ce que** la sous-étape d'application (48) prévoit le dépôt d'au moins une encre comprenant ladite au moins une particule fonctionnelle.

5. Procédé selon la revendication précédente, **caractérisé en ce que** ladite encre comprend un fluide transportant ladite au moins une particule fonctionnelle, le fluide étant choisi parmi un solvant, un polymère viscoélastique, une huile, de l'eau et/ou une solution aqueuse.

6. Procédé selon l'une quelconque des revendications 2 à 5, **caractérisé en ce que** la sous-étape de traitement (49) de la couche d'au moins une particule fonctionnelle comprend une phase de fixation de ladite couche d'au moins une particule fonctionnelle sur le composant horloger (10).

7. Procédé selon la revendication précédente, **caractérisé en ce que** la phase de fixation prévoit une exposition de la couche d'au moins une particule fonctionnelle à un flux d'air notamment chaud/sec et/ou à un rayonnement lumineux notamment à un rayonnement ultraviolet (UV) ou encore infrarouge.

8. Procédé selon l'une quelconque des revendications 1 à 7, **caractérisé en ce que** lorsqu'une autre particule forme ladite au moins une couche édifiée lors de l'étape de construction (47), cet autre particule est colorée, pigmentée, incolore, transparente ou translucide.

9. Procédé selon l'une quelconque des revendications 1 à 8s, **caractérisé en ce que** ladite au moins une particule fonctionnelle est comprise dans une encre fonctionnelle (14a) sélectionnée parmi le groupe constitué par une encre électroluminescente, une encre phosphorescente, encre photoluminescente, une encre conductrice, une encre semiconductrice, une encre électroactive, une encre magnétique, une encre photochrome, encre électrochrome, encre thermochrome, une encre ionochrome et une encre mécanochrome.

10. Composant horloger (10) comprenant au moins un élément fonctionnel (20) susceptible d'être obtenu à partir du procédé selon l'une quelconque des revendications 1 à 9.

11. Composant horloger (10) selon la revendication précédente, **caractérisé en ce que** l'élément fonctionnel (20) est un élément constitutif du composant horloger (10) qui est susceptible de changer d'état de manière réversible, ce changement d'état permettant de réaliser une fonction d'affichage de la pièce d'horlogerie (30) ou de constituer une étape dans un processus de fonctionnement d'un mouvement de la pièce d'horlogerie (30) visant à accomplir une fonction de cette pièce d'horlogerie.

12. Pièce d'horlogerie (30) comportant au moins un composant horloger (10) selon l'une quelconque des revendications 10 et 11.

13. Système de réalisation (1) d'un élément fonctionnel (20) sur un composant horloger (10) mettant en oeuvre le procédé selon l'une quelconque des revendications 1 à 9, le système (1) comprenant un dispositif d'impression (3) et une unité de contrôle (2), ledit dispositif d'impression (3) étant connecté à ladite unité de contrôle (2).

14. Système (1) selon la revendication précédente, **caractérisé en ce que** l'unité de contrôle (2) comprend des ressources matérielles et logicielles, lesdites ressources matérielles comprenant des éléments de mémoire (5) comportant au moins une représentation graphique numérique de référence (9a) relative à l'élément fonctionnel (20) à réaliser sur le composant horloger (10) et des données descriptives (9b) relatives à ladite au moins une représentation graphique numérique de référence (9a).

15. Programme d'ordinateur comprenant des instructions de code de programme pour l'exécution des étapes du procédé selon l'une quelconque des revendications 1 à 9 lorsque ledit programme est exécuté par une unité de contrôle (2).
